(19) Europäisches Patentamt
European Patent Office
Office européen des brevets

(11) EP 1 884 762 A2

(12) **EUROPEAN PATENT APPLICATION**

(43) Date of publication:
**06.02.2008 Bulletin 2008/06**

(51) Int Cl.:
***G01N 15/02*** *(2006.01)*

(21) Application number: **07113503.2**

(22) Date of filing: **31.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **04.08.2006 JP 2006213073**

(71) Applicant: **Shimadzu Corporation**
**Kyoto-shi**
**Kyoto 604-8511 (JP)**

(72) Inventor: **Ohkubo, Kunihiko**
**Kyoto Kyoto 604-8511 (JP)**

(74) Representative: **Wilhelms . Kilian & Partner**
**Patentanwälte**
**Eduard-Schmid-Strasse 2**
**81541 München (DE)**

(54) **Light Scattering Detector**

(57) The light scattering detector according to the present invention aims at simultaneously measuring the molecular weight and size of particles having varieties of diameters. This detector facilitates the measurement operation and knowing how particles associate or dissociate as time progresses. In this detector, the emitted light (static light scattering measurement light) having a first wavelength by the first light source and the emitted light (dynamic light scattering measurement light) having a second wavelength which is different from the first wavelength by the second light source are combined by a beam splitter 5 and coaxially directed onto the sample sell 10 to which a liquid sample S is supplied. While the irradiated area by the static light scattering measurement light is large, the irradiated area by the dynamic light scattering measurement light, which is coherent light, is narrow. Detectors 12 which selectively detect the first wavelength and detectors 13 which selectively detect the second wavelength are placed so as to encircle the sample cell 10. The detection signals by the detectors 11, 12 and the detection signals by the detectors 13 are separately mathematically-operated by a data processor 15 to calculate the molecule weight and size of the particles in the sample S.

Fig. 1

**Description**

The present invention relates to a light scattering detector used for a microscopic-particle detector for measuring the molecular weight and size, e.g. turning radius, of microscopic particles dispersed in a liquid sample.

BACKGROUND OF THE INVENTION

In general, components having large molecular weights, insoluble polymers or microscopic particles, are difficult or impossible to separate by liquid chromatography. As methods for separating such substances, Gel Permeation Chromatography (abbreviated as GPC hereinafter) and Field Flow Fractionation (abbreviated as FFF hereinafter), for example, are known. And, as a detector of the microscopic particles separated by GPC or FFF, a multiangle light scattering detector is conventionally used, which is founded on the principle of a static light scattering method (see Patent Documents 1 and 2 for examples). The multiangle light scattering detector is able to simultaneously detect the lights coming out from a sample at plural different scattering angles. By applying a calculation method such as the Zimm Plot method or Berry Plot method to the intensities of these scattered lights, it is possible to calculate the molecular weight, size (turning radius), or other data of the microscopic particles (see Non-Patent Document 1 for example).

Such a multiangle light scattering detector as previously described is able to measure particles having a diameter of more than roughly 10nm with a high degree of accuracy. However, the accuracy reduces when measuring ultrafine particles with a diameter of less than 10nm, and the measurement time becomes longer since the calculation becomes more complicated. One useful approach to obtain information corresponding to the diameter of such ultrafine particles is to use not a static light scattering method but a dynamic light scattering method (see Non-Patent Document 2 for example). The dynamic light scattering method is based on the assumption that the motion of microscopic particles in a solution is subject to Brownian motion which depends on the size of the particles. With this method, the fluctuation of the scattered light in accordance with the Brownian motion is first measured, the auto-correlation function of the scattered light intensity is evaluated with the measured fluctuation, and then the diffusion coefficient of the particles is calculated to obtain information on the size of the particles. Although the calculating method based on a scattered light intensity is different between the static light scattering method and the dynamic scattering light method, both optical systems of the apparatus for these methods are similar. Conventionally, hybrid apparatus including both types of the apparatus have been, therefore, available commercially (see Non-Patent Document 3 for example).

The static light scattering method and the dynamic light scattering method are different in the condition of light flux to be irradiated onto a sample because of the difference of the measurement principles. More specifically, in the dynamic light scattering method, the light flux is narrowed down to a very small diameter and the light is locally gathered so as to heighten the sensitivity. Compared with this, in the static light scattering method, the light flux to be irradiated onto a sample is extended and the area of the scattering region is enlarged in order to enhance the measurement accuracy. For this reason, with conventional hybrid light scattering detectors, the light flux size is switched at the point where a sample cell is disposed in the following manner; when a static light scattering measurement is carried out, an aperture with a large bore is inserted into a light path, and when a static light scattering measurement is carried out, a small and narrow aperture mask is inserted into the light path when a dynamic light scattering measurement is carried out. Since such mechanical switching takes time, however, the detection of the microscopic particles included in a liquid sample which is continuously eluted from GPC or FFF is performed by either one of the static light scattering measurement or dynamic light scattering measurement.

Therefore, in the case when the diameters of the particles to be measured vary from small to large, as in the case when measuring a sample whose component was separated as time progresses by a chromatograph or other devices, small size particles are not likely to be detected when the device is set to perform a static light scattering measurement. On the other hand, large size particles are not likely to be detected when the device is set to perform a dynamic light scattering measurement. Hence, a static light scattering measurement and a dynamic light scattering measurement must be carried out at least one time each in order to measure one sample. This makes an operation troublesome, and also causes the problem that it is difficult to enhance the measurement accuracy because GPC or FFF cannot always be performed under the very same condition.

Problems of missing large size or small size particles are also caused when the size of the particles in a liquid sample change drastically and quickly as time progresses because of, for example, a reaction, binding, or condensation, such as a condensation or association of protein or protein folding.

In addition, one cannot tell which is suitable a static light scattering method or a dynamic light scattering method for measuring a liquid sample in which particles whose diameters are unknown are dispersed until a measurement is once carried out with either of the measurement methods and the result is obtained. Therefore, if a measurement is performed with either of the measurement methods and the method turns out to be inappropriate, the same sample needs to be measured again with the other measurement method. This makes an operation troublesome, and it may be possible that the proper result cannot be obtained if a re-measurement is difficult to be performed for the reason that the sample is valuable or scarce.

Patent Document 1: U.S. Pat. No. 4541719
Patent Document 2: U.S. Pat. No. 5129723
Non-Patent Document 1: "Jikken Kagaku Koza 26 - Kobunshi Kagaku", edited by The Chemical Society of Japan, published by Maruzen, 2005, pp.315-323
Non-Patent Document 2: "Shin Kobunshi Jikken Gaku 6", edited by The Society of Polymer Science, Japan, published by Kyoritsu Shuppan, 1997, p.299
Non-Patent Document 3: "Super-dynamic Light Scattering Spectrophotometer DLS-8000 series", OTSUKA ELECTRONICS CO., LTD, Internet <http://www.photal.co.jp/english/product/dls-sls-80-65_0.html>, [June 19, 2007]

SUMMARY OF THE INVENTION

The present invention is intended to solve the previously described problems and aims at providing a light scattering detector capable of obtaining information on the molecular weight, size, or other data of the particles having various diameters with a high degree of accuracy and in a single measurement.

Thus, a first aspect of the invention in order to solve the aforementioned problems provides a light scattering detector for detecting a microscopic particle in a liquid or gaseous sample, the detector including:

a) a transparent sample cell for holding a sample;
b) a first light source for emitting a static light scattering measurement light having a first wavelength or a first range of wavelengths;
c) a second light source for emitting a dynamic light scattering measurement light having a second wavelength or a second range of wavelengths which are different from the first wavelength or the first range of wavelengths;
d) a first detecting unit comprising plural detectors arranged so as to encircle the sample cell, the detector being capable of selectively detecting the first wavelength or the first range of wavelengths in order to detect lights scattered at different scattering angles around the sample cell in response to an irradiation of the static light scattering measurement light;
e) a second detecting unit comprising one or plural detectors which are arranged so as to encircle the sample cell, the detector being capable of selectively detecting the second wavelength or the second range of wavelengths in order to detect lights scattered at different scattering angles around the sample cell in response to an irradiation of the dynamic light scattering measurement light; and
f) a mathematical processor for receiving a detection signal from the first detecting unit and a detection signal from the second detecting unit in parallel when both the static light scattering measurement light by the first light source and the dynamic light scattering measurement light by the second light source are irradiated onto the sample cell at a same time, and then performing both a mathematical operation by a static light scattering method based on the former detection signal and a mathematical operation by a dynamic light scattering method based on the latter detection signal.

A second aspect of the invention to solve the aforementioned problems provides a light scattering detector for detecting a microscopic particle in a liquid or gaseous sample, the detector including:

a) a transparent sample cell for holding a sample;
b) a first light source for emitting a static light scattering measurement light;
c) a second light source for emitting a dynamic light scattering measurement light;
d) an incident light switcher for time-divisionally irradiating the sample cell with the static light scattering measurement light by the first light source and the dynamic light scattering measurement light by the second light source;
e) a detecting unit comprising plural detectors which are arranged so as to encircle the sample cell and detect lights scattered at different scattering angles around the sample cell in response to an irradiation of the static light scattering measurement light or the dynamic light scattering measurement light; and
f) a mathematical processor for separating a detection signal from the detecting unit into a static light scattering detection signal and a dynamic light scattering detection signal in synchronization with a time-divisionally switching of incident lights by the incident light switcher, and then performing both a mathematical operation by static light scattering method based on the former detection signal and a mathematical operation by dynamic light scattering method based on the latter detection signal.

In a light scattering detector according to the first aspect of the invention, two light sources, the first and second light sources, having different wavelengths or ranges of wavelengths are prepared and the emitted lights from these light sources simultaneously irradiate the sample cell coaxially or non-coaxially. In order to make both beams coaxially irradiate, the light scattering detector may preferably further include a light combiner for introducing the incident light by the first light source and the incident light by the second light source to the sample cell along the same light path. The beam area irradiated onto a sample in the sample cell may be preferably relatively large in general, because in the static light scattering method, the size of the particles to be measured is basically large, and the measurement accuracy is enhanced if the scattered light from the many particles are simultaneously measured. On the other hand, in a dynamic light scattering method, the fluctuation or variation of the scattered light due to the motion of particles must be detected. The beam area may preferably be small to focus so that the variation becomes relatively large. The same is true in the second aspect of the invention.

Each detector of the first detecting unit can be a normal detector with a light filter in front of it (in the incident light path) which selectively transmits the first wavelength or the first range of wavelengths. Each detector of the second detecting unit can be a normal detector with a light filter in front of it (in the incident light path) which selectively transmits the second wavelength or the second range of wavelengths. Alternatively, the sensitivity characteristic of each detector itself may be adjusted to each of the first or second wavelength or ranges of the wavelengths as a matter of course.

Contrary to the incident lights by the first light source and the second light source, the scattered light from the sample in the sample cell spreads in many directions and the scattered lights are overlapped. The first detecting unit selectively detects only the light of the first wavelength or the first range of wavelengths, and the second detecting unit selectively detects only the light of the second wavelength or the second range of wavelengths. Therefore, it is possible to simultaneously measure both the scattered light intensity for the static light scattering method and the scattered light intensity for the dynamic light scattering method, and concurrently each scattered light can be separated to be detected. The mathematic processor performs a mathematic operation for the detection signal from the first detecting unit in accordance with a predetermined algorithm based on a static light scattering method to calculate the molecular weight or turning radius of particles having a relatively large diameter. The mathematic processor also performs a mathematic operation for the detection signal from the second detecting unit in accordance with a predetermined algorithm based on a dynamic light scattering method to calculate the size and other data of particles having a relatively small diameter.

The light scattering detector according to the first aspect of the invention separates the light for the static light scattering method and the light for the dynamic light scattering method by wavelength division (range of wavelengths division). On the other hand, the light scattering detector according to the second aspect of the invention separates the measurement by the static light scattering method and the measurement by the dynamic light scattering method by time-division control and operation. For this purpose, the incident light switcher periodically switches the emitted light by the first light source and the emitted light by the second light source. The mathematical processor separates the detection signal from the detecting unit into a static light scattering detection signal and a dynamic light scattering detection signal in synchronization with this switch, and performs a mathematical operation for the former detection signal in accordance with a predetermined algorithm based on the static light scattering method and simultaneously performs a mathematical operation for the latter detection signal in accordance with a predetermined algorithm based on the dynamic light scattering method.

The incident light switcher selects the incident light by the first light source or the incident light by the second light source, and introduces the selected incident light to the sample cell along the same light path, i.e. coaxially. Alternatively, both light beams can be non-coaxially irradiated onto the sample cell if they do not temporally overlap. In a dynamic light scattering measurement, the fluctuation of the scattered light intensity needs to be measured. If the incident light switcher switches acceptably faster than the fluctuation, the influence of the switching of the incident lights upon the dynamic light scattering measurement result can be eliminated. When the incident lights are switched with this rapidity, it can be considered that a static light scattering measurement and a dynamic light scattering measurement are substantially performed at the same time, although they are in actuality temporally shared.

As previously described, with the light scattering detector according to the first and second aspect of the present invention, it is possible to simultaneously obtain information on the molecular weight, size, and other related data of particles with one device. The particles to be measured may vary over a wide range in size; from about 1nm or smaller to several tens of $\mu$m or larger. Hence, there is no need for separating a static light scattering measurement and a dynamic light scattering measurement in accordance with the particles to be measured, which leads to a simple measurement operation.

In addition, this eliminates the problem of detection-missing, which leads to accuracy enhancement, even in situations when particles suitable for a static light scattering method and particles suitable for a dynamic light scattering method are mixed in one sample, when the particle size rapidly changes during a measurement, or when the particle size is unknown. In particular, when particles of protein associate, for example, how the particle diameter, molecular weight, turning radius, and other states temporally change can be tracked in real time; therefore, knowledge of the structural change will be obtained. In a similar way, it is possible to track the association or dissociation state of plural molecules in real time. Furthermore, since there is no need for performing plural measurements in order to obtain information on the size of the particles with a large diameter as is the case with a conventional system, it is possible to obtain such information without fail, even if the sample is valuable or scarce.

In a measurement by a dynamic light scattering method, the scattered light intensity is not correlated if there is no spatial coherence within an irradiated area. Therefore, the incident light by the second light source must be coherent light, and a laser light source which emits a laser with high coherence can be preferably used. On the other hand, the incident light by the first light source is not necessarily coherent light, and incoherent light can also be used. Here, "incoherent light" means light having lower coherence in comparison to the aforementioned coherent light, and includes not only completely incoherent light but also partial coherent light whose state is between coherent light and completely incoherent light.

In order to calculate the molecular weight, turning radius, and other values by the static light scattering method, information on the concentration of particles in the sample is required. However, if external devices capable of measuring the concentration were connected, such as a refractometrical detector and absorption spectrophotometer, the device would be bigger in size and more expensive, and besides, a time-lag correction would be required because both the concentration and the scattered light intensity cannot be measured at a time. Then, it is preferable that the light scattering detectors according to the first and second invention further include a transmitted light detector for detecting the light which has passed thorough the sample cell in response to the incident light by the first light source. If the incident light by the first light source is incoherent light, the light which has passed thorough the sample (scattered light with a scattering angle of 0 degrees) is absorbed (scattered) depending on the concentration of the particles in the sample. Therefore, the concentration of the particles in the sample can be calculated using a detection signal from the transmitted light detector. Using the concentration value for the operation by the static light scattering method, the molecular weight, size of the particles and other values are accordingly obtained.

BRIEF DESCRIPTION OF THE DRAWINGS

Fig. 1 is an overall block diagram of a hybrid light scattering detector which is an embodiment of the first aspect of the invention.
Fig. 2 shows a state of the incident light in the hybrid light scattering detector shown in Fig. 1.
Fig. 3 is an overall block diagram of a hybrid light scattering detector according to another embodiment of the first aspect of the invention.
Fig. 4 is an overall block diagram of a hybrid light scattering detector according to another embodiment of the first aspect of the invention.
Fig. 5 is an overall block diagram of a hybrid light scattering detector which is an embodiment of a light scattering detector according to the second aspect of the invention.
Fig. 6 is a schematic plain view of a sector mirror in the hybrid light scattering detector shown in Fig. 5.

EXPLANATION OF NUMERALS

| 1 ... | First Light Source |
|---|---|
| 2 ... | Second Light Source |
| 3,4 | ... Lens |
| 5,6 ... | Beam Splitter |
| 7 ... | Partial Reflection Mirror |
| 8 ... | First Intensity Monitoring Detector |
| 9 ... | Second Intensity Monitoring Detector |
| 10 ... | Sample Cell |
| S ... | Liquid Sample |
| 11 ... | Transmitted Light Detector |
| 12 ... | Static Light Scattering Detector |
| 13 ... | Dynamic Light Scattering Detector |
| 8a, 9a, 12a, 13a ... | Optical Filter |
| 15 ... | Data Processor |
| 16 ... | Static Light Scattering Processor |
| 17 ... | Dynamic Light Scattering Processor |
| 18 ... | Signal Sorter |

| 20 ... | Sector Mirror |
| 20a ... | Rotation Axis |
| 20b | ... Reflection Portion |
| 20c ... | Transmission Portion |
| 21 | ... Drive Unit |
| 22 ... | Controller |

DETAILED DESCRIPTION OF PREFERRED EMBODIMENTS

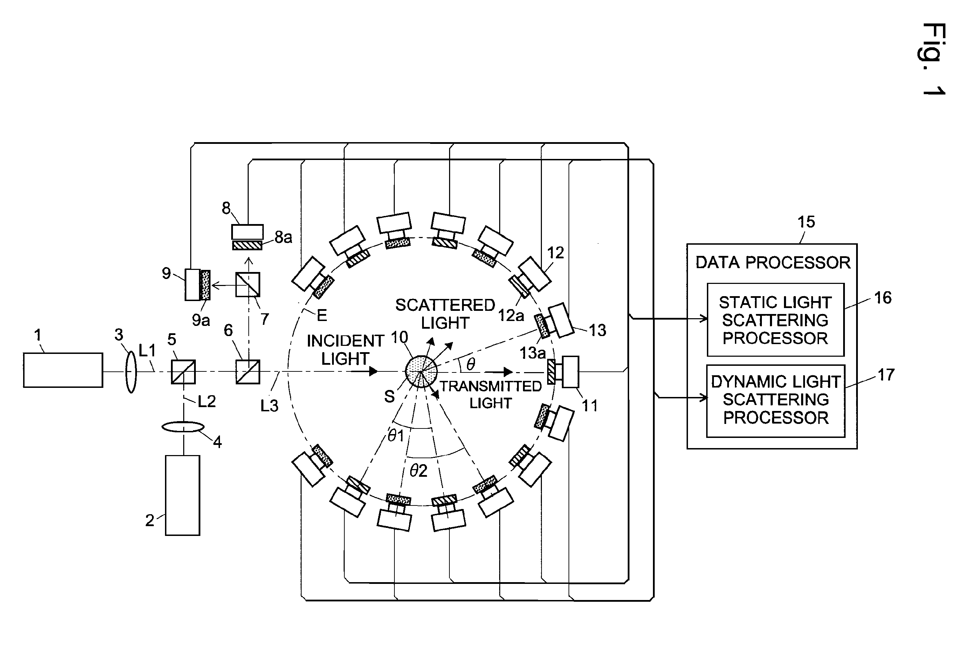

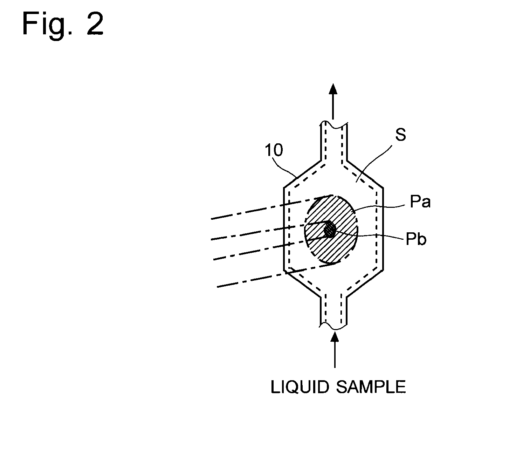

First, a hybrid light scattering detector which is an embodiment of the light scattering detector of the first aspect of the invention is described with reference to figures. Fig. 1 is an overall block diagram of a hybrid light scattering detector of this embodiment and Fig. 2 shows a state of an incident light in the sample cell.

In the hybrid light scattering detector of this embodiment, a sample cell 10 is placed at the center of the circle E. The sample cell 10 is a flow cell for providing the liquid sample S thereto with transparent walls. (As the sample cell 10, other cells for containing a liquid sample such as a square cell and a test-tube cell may be alternatively used.) On the circle E, a transmitted light detector 11, a plurality of static light scattering detectors, and a plurality of dynamic light scattering detectors are placed around the sample cell 10. The plural static light scattering detectors 12 are placed with a predetermined angular interval of θ1, and the plural dynamic light scattering detectors are placed with a predetermined angular interval of θ2. In this case, the transmitted light detector 11, the static light scattering detector 12, and the dynamic light scattering detector 13 are the same. Both the transmitted light detector 11 and the static light scattering detector 12 have an optical filter 12a in front of themselves which has an optical characteristic to selectively transmit the first wavelength as will be described later. The dynamic light scattering detector 13 has an optical filter 12b in front of itself which has an optical characteristic to selectively transmit the second wavelength as will be described later.

In order to direct light onto the sample cell 10, two types of light sources are used; the first light source 1 for emitting the light of the first wavelength and the second light source 2 for emitting the second wavelength which does not overlap (or is separable from) the first wavelength. The first light source may be a laser source which emits laser light which is coherent light, or an incoherent light source which emits incoherent light whose coherence is relatively low. When the sample concentration is calculated based on the detection signals by the transmitted light detector 11 as will be described later, the coherence of the incident light is preferably low. Therefore, it is preferable that the light source 1 should be an incoherent light source when the concentration is simultaneously measured. On the other hand, the second light source 2 is a laser source which emits laser light having high coherence.

The light emitted from the light source 1 is condensed by the lens 3 and travels along the light path L1. The light emitted from the light source 2 is condensed by the lens 4 and travels along the light path L2. Both lights are subsequently combined by the beam splitter 5, serving as a light combiner in this invention, and then are sent to the light path L3, which has the same optical axis. On the light path L3 is disposed another beam splitter 6. A portion of the light directed to the sample cell 10 is split and reflected by the beam splitter 6, and is further divided into two by the partial reflection mirror (or a beam splitter) 7. Then one is introduced into the first intensity monitoring detector 8, and the other is introduced into the second intensity monitoring detector 9. The first intensity monitoring detector 8 detects the light intensity of the first wavelength which is selectively transmitted by the optical filter 8a, and the second intensity monitoring detector 9 detects the light intensity of the second wavelength which is selectively transmitted by the optical filter 9a. The detection signals by the first and second intensity monitoring detectors 8, 9 are provided to a data processor 15, which will be described later, and will be used to correct the fluctuations of the light intensities of the first and second light sources 1, 2.

The incident light along the light path L3 is irradiated onto the center of the sample cell 10. The incident light by the first light source 1 is condensed by the lens 3 so as to be surely irradiated onto the liquid sample S with a relatively large area Pa as shown in Fig. 2, so that the volume related to the scattering becomes relatively large. This is because the more particles in the scattering volume, the better the S/N ratio of a detection signal will be, in a static light scattering measurement. On the other hand, although the incident light by the second light source 2 is condensed by the lens 4 to be directed onto the center of the sample cell 10 in a similar manner, the light flux is narrowed; the irradiated area Pb on the sample cell 10 is considerably small compared to the aforementioned area Pa. This is because the smaller an irradiated area is, the higher the signal intensity from that area will be in a dynamic light scattering measurement.

In response to the incident light by the first light source 1 (static light scattering measurement light) and the incident light by the second light source 2 (dynamic light scattering measurement light), both of which are coaxially and simultaneously irradiated onto the liquid sample S in the sample cell 10, scattered light from scattered particles in the liquid sample S which has the wavelength of each incident light is emitted into the environment with the intensity as well as at the angle reflecting the properties such as the size (turning radius, fluid radius, etc.), shape, and refractive index of a particle. Among the scattered light, the transmitted light detector 11 and the plural static light scattering detectors 12 selectively detect the scattered light corresponding to the incident light by the first light source 1, and the plural dynamic light scattering detectors 13 selectively detect the scattered light corresponding to the incident light by the second light source 2.

The detection signals by the transmitted light detector 11 and the plural static light scattering detectors 12 are provided to the static light scattering processor 16, which is included as a function in the data processor 15. Similarly, the detection signals by the plural dynamic light scattering detectors 13 are provided to the dynamic light scattering processor 17, which is included as a function in the data processor 15. Each of the static light scattering processor 16 and the dynamic light scattering processor 17 performs a mathematic processing in accordance with a predetermined algorithm based on the provided detection signals, and as a result, calculates and provides information on the molecular weight, size, and other data of the particles.

For example, when a liquid sample whose components have been separated by GPC or FFF (not shown) is provided to the sample cell 10 with a predetermined feed rate, it is possible to simultaneously obtain both the scattered light intensity for a static light scattering measurement and the scattered light intensity for a dynamic light scattering measurement corresponding to the liquid sample S in the sample cell 11. Since both scattered lights are completely separated in wavelength, the detector 12 can detect only the scattered light derived from the incident light by the first light source 1, and the detector 13 can detect only the scattered light derived from the incident light by the second light source 2.

The details of the mathematic operation by the static light scattering processor 16 are roughly explained hereinafter, although they are known as disclosed in Patent Documents 1 and 2, Non-Patent Documents 1 and 2, and other documents. The scattering intensity for a particle without the influence of solvent at plural scattering angles θ, that is, excess Rayleigh ratio $\Delta R(\theta)$ is given by the following equation (1):

$$K \cdot C / \Delta R(\theta) = 1 / M \cdot P(\theta) + 2A \cdot Q(\theta) \cdot C + O(C^2) \quad \cdots (1)$$

where K is a constant experimentally determined, C is the concentration of particles, M is the molecular weight of the particle, A is the turning radius of the particle, $P(\theta)$ is the intra-molecular interference factor, $Q(\theta)$ is the inter-molecular interference factor. The excess Rayleigh ratio is given by eliminating the influence of the solvent from the Rayleigh ratio which is given by the following equation (2) based on the general detection of the scattering light as previously described.

$$R = I \cdot r^2 / I_0 \cdot V \quad \cdots (2)$$

where I0 is the incident light intensity, r is the distance from the sample cell to the detector, I is the scattered light intensity, and V is the scattering volume.

With the equations (1) and (2), the excess Rayleigh ratio $\Delta R(\theta)$ at plural scattering angles θ is obtained. Then, the influence of inter-molecular interference or intra-molecular interference is eliminated by extrapolating a zero concentration (C=0) and a zero angle (θ=0) with a conventional technique such as the Zimm Plot method and Berry Plot method. The molecular weight M and the turning radius A are calculated in accordance with the following equations (3) and (4):

$$K \cdot C / \Delta R(C=0) = 1 / M \cdot P(0) = 1 / M \quad \cdots (3)$$

$$KC / \Delta R(\theta=0) = 1 / M + 2A \cdot C \quad \cdots (4)$$

The value of the concentration C is necessary for these calculations. However, when the incident light is incoherent light, the intensity of the scattered light with zero scattering angle (substantially transparent light) obtained by the transmitted light detector 11 depends on the number of the particles present in the scattering volume. Consequently, the concentration C can be evaluated. The evaluated value of concentration C can be used for calculating the molecular weight and the turning radius of the particles. Of course, the value of the concentration C may be obtained by using the detection result of an external refractometrical detector or absorption spectrophotometer.

The details of the mathematical operation by the dynamic light scattering processor 17 are also well-known as disclosed in Non-Patent Documents 1 and 2. The outline of the operation is now described. The auto-correlation function G(t) is given by the following equation (5) using scattering intensities $I(t_0)$ and $I(t_0+t)$ at times to and $t_0+t$:

$$G(t) = <I(t_0) \cdot I(t_0+t)>_{t0} / <I(t_0)>^2_{t0} \quad \cdots (5)$$

where $<...>_{t0}$ is the long-time average in connection with t0 (long time compared to the fluctuation of the scattered light). With the auto-correlation function G(t), the translational diffusion coefficient will be obtained. Since the translational diffusion coefficient depends on the hydrodynamic radius of a particle, the hydrodynamic radius, i.e. the size, of the particle can be calculated by obtaining the correlation function. In addition, since a scattering angle differs depending on the size of a particle, it is possible to measure the size of different particles by analyzing the detection signal from the plural detectors 13.

As previously described, with the hybrid light scattering detector according to this embodiment, it is possible to substantially and simultaneously obtain information on the molecular weight and size (e.g. turning radius, hydrodynamic radius) of the particles having various diameters.

[0036] [0034] In a dynamic light scattering measurement, the correlation of the scattered light intensity cannot be obtained if there is no spatial coherence of the scattered light in the irradiated area. Therefore, the high coherence within the irradiated area for scattering is essential. In other words, the coherence at both ends in the scattering region must be high on the entire area of the detector's detection plane. Here, in order to make the coherence 0.88 or more, the condition of the following equation (6) must be met:

$$Lc = \lambda \cdot r / 2\pi \cdot \rho = 0.16\lambda \cdot r / \rho \quad \cdots (6)$$

where Lc is the diagonal length of the detection plane, r is the distance between the sample cell 10 and the detector 13, $\rho$ is the radius of the illuminated area on the sample S. As the equation (6) becomes

$$\rho \cdot Lc = 0.16 \cdot \lambda \cdot r,$$

it is necessary to make $\rho$ small enough or make r large.

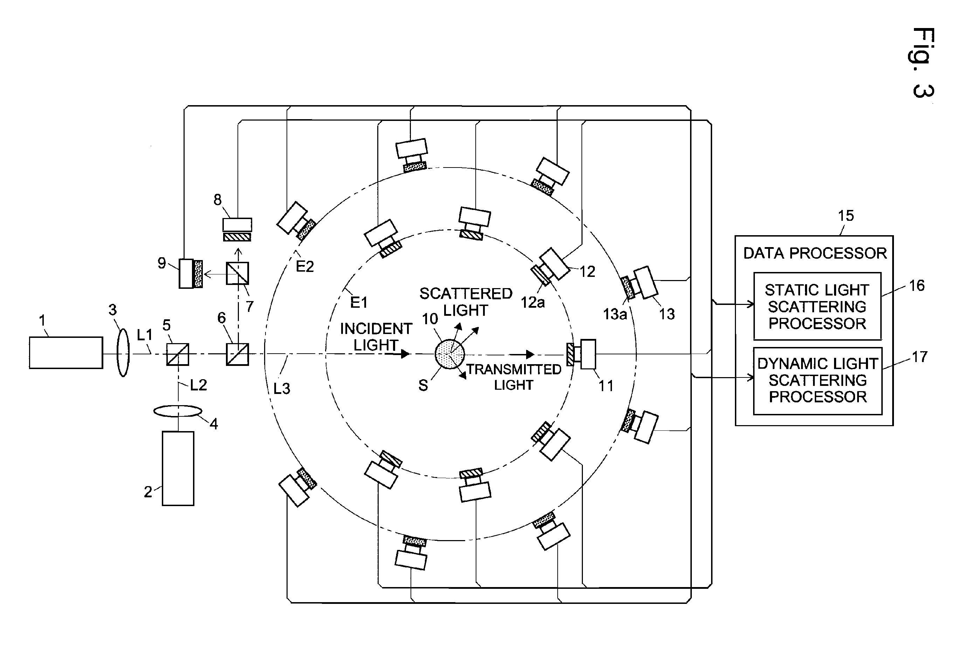

Therefore, the distance r between the sample cell 10 and the detector 13 is preferably large for a dynamic light scattering measurement. Since operations of a static light scattering measurement and a dynamic light scattering measurement are independent from each other, the distance between the sample cell 10 and the detector 12 and the distance between the sample cell 10 and the detector 13 are not necessarily the same. Hence, the optical system in the hybrid light scattering detector according to the aforementioned embodiment can be changed as shown in Fig. 3. In this modification example, the transmitted light detector 11 and the plural static light scattering detectors 12 are disposed on the circle E1 to surround the sample cell 10, and similarly, the plural dynamic light scattering detectors 13 are disposed on the circle E2, which has the same center and larger radius compared to the circle E1, to surround the sample cell 10. This configuration makes the distance between the sample cell 10 and the detector 13 long, which leads to enhancing the coherence of the scattered light.

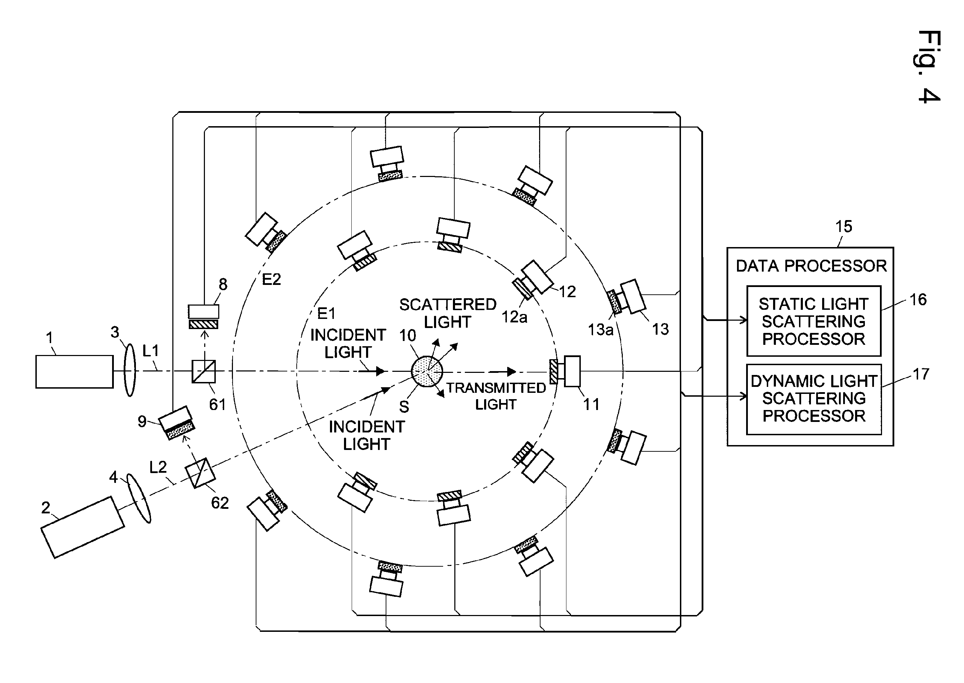

In the previously-described embodiment, two incident lights having different wavelengths are coaxially directed onto the sample cell 10, however, it is not necessary that they should be coaxially directed. Fig. 4 shows a configuration of the hybrid light scattering detector according with its incident optical system modified. The incident light by the first light source 1 travels along the light path L1, and the incident light by the second light source 2 independently travels along the light path L2 to the sample cell 10. As a matter of course, it is possible to perform the same measurement with this configuration as in the previously described embodiment.

In the configurations shown in Figs. 1, 3, and 4, the light sources 1 and 2, and the detectors 11, 12, and 13 are disposed on the same plane. This device configuration facilitates the optical design, the manufacture, and the theoretical calculation for making a computing algorithm on the processors 16 and 17. However, it is not necessary to place every aforementioned component on the same plane. In addition, the polarization direction of the electrical vector of the incident light may be perpendicular to the plane or may be in the plane, although the theoretical calculation for the mathematic processing needs to be modified in accordance with each case. Moreover, in a static light scattering measurement, the distances between the sample cell 10 and each detector 12 may be different (i.e. the detectors 12 are not disposed on the same circle) as long as the scattering angle $\theta$ is determined, although the calculation becomes complicated. Similarly, in a dynamic light scattering measurement, the distances between the sample cell 10 and each detector 13 may vary because this causes little influence as long as the coherence condition is satisfied.

In a dynamic light scattering measurement, it is also possible to detect the scattered light with only one detector to calculate the size of the particles, instead of detecting the scattered light intensity with plural scattered angles. In this case, however, the range of the particle size which can be calculated with high accuracy becomes narrow compared to the case when the detection is performed at plural angles as previously described.

In some cases, the intensity of fluorescence, Raman light, or other varieties of light may be intense enough to interfere with the detection of the scattered light. In this case, between the emitted lights by the first light source and the second light source 2, the one having the longer wavelength will be affected. In general, Raman scattered light does not matter since the intensity of Raman scattered light is lower than that of Rayleigh scattered light by more than a few orders of magnitude. On the other hand, fluorescence may possibly become a problem when the concentration of the fluorescence emitter included in the sample S is high. In order not to be affected by the fluorescence, selecting a wavelength with comparatively few fluorescence substances, other than naturally-occurring fluorescence excitation wavelengths, is practical. In addition, if the incident lights by the first light source 1 and the second light source 2 are emitted not simultaneously but time-divisionally as will be described later, the fluorescence excited by one incident light will not affect the measurement with the other incident light because the fluorescence lifetime is generally as short as a few nanoseconds.

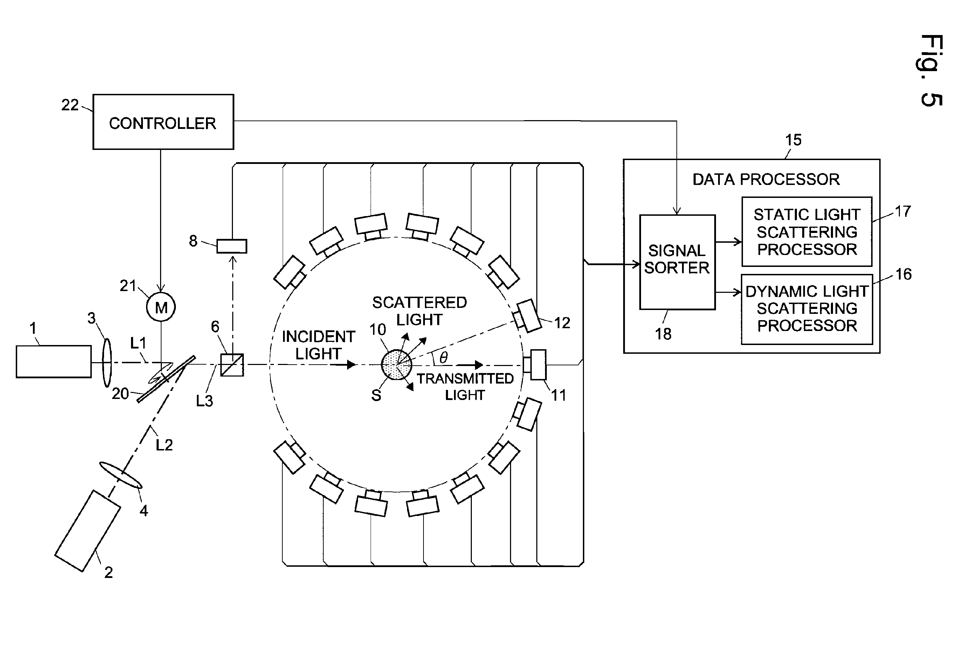

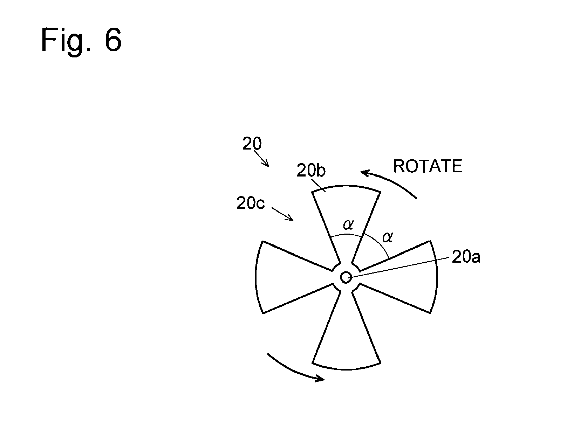

Next, a hybrid light scattering detector which is an embodiment of the light scattering detector according to the second aspect of the invention with reference to Figs. 5 and 6 is presented. Fig. 5 is an overall block diagram of the hybrid light scattering detector according to the present embodiment and Fig. 6 is a schematic plain view of a sector mirror. The same or corresponding components as in the previously described embodiment are indicated with the same numeral and the explanations are omitted if unnecessary.

The hybrid light scattering detector in this embodiment performs, unlike the previously described embodiment, the static light scattering measurement and the dynamic light scattering measurement in a time-division manner, not in a wavelength-division manner. Therefore, the detectors 11 and 12 disposed on the circle E do not have optical filters, and their sensitivity properties are equal. However, a narrow band-pass filter which transmits only wavelengths from the light sources is used in order to eliminate the fluorescence induced from the sample by the incident light (of longer wavelength). The first light source 1 is an incoherent light source or a laser light source, and the second light source 2 is a laser light source as in the previously described embodiment. The wavelengths of the incident lights from the first light source 1 and the second light source 2 can be overlapped.

The light for a static light scattering emitted from the first light source 1 to travel along the light path L1 and the light for a dynamic light scattering emitted from the second light source 2 to travel along the light path L2 are alternately selected by the sector mirror 20, serving as the light switcher of the present invention, and introduced to the light path L3 towards the sample cell. The sector mirror 20 includes reflection portions 20b and transparent portions 20c which have the same angular range $\alpha$ and are alternately disposed around a rotating axis 20a as shown in Fig. 6. The rotation axis 20a is driven to rotate in one direction at a predetermined speed by a drive unit 21 such as a motor. At the moment when the transparent portion 20c is at the crossing of the light path L1 and light path L2, the incident light for a static light scattering measurement is introduced to the light path L3, and at the moment when the reflection portion 20b is at the crossing, the incident light for a dynamic light scattering measurement is introduced to the light path L3.

The drive unit 21 makes the sector mirror 20 rotate at a constant frequency under the control of the controller 22. Since the controller 22 grasps the rotational position of the sector mirror 20, the controller 22 provides timing control signals indicating the period when incident light is falling onto the sample cell 10 to the data processor 15. A signal sorter 18 in the data processor 15 alternately sorts the detection signals by the plural detectors 11 and 12 into a static light scattering processor 16 and a dynamic light scattering processor 17 based on the timing control signals. Therefore, in the period when the light by the first light source 1 (static light scattering light) is falling onto the sample cell 10, the scattered light intensity detected by the plural detectors 11 and 12 is provided to the static light scattering processor 16, and in the period when the light by the second light source 2 (dynamic light scattering light) is falling onto the sample cell 10, the scattered light intensity detected by the plural detectors 11 and 12 is provided to the dynamic light scattering processor 17.

Each of the static light scattering processor 16 and the dynamic light scattering processor 17 calculates the information on the molecular weight or the size of the particles based on the scattered light intensity as in the manner previously described. The static light scattering measurement and the dynamic light scattering measurement are time-divisionally carried out; in each measurement, the incident light is introduced to the sample cell 10 and the scattered light corresponding to it is detected. However, even if a liquid sample S is supplied to the sample cell 10 at a constant flow rate, by making the sector mirror 20 rotate much faster than the flow rate, it is possible to consider that the static light scattering measurement and the dynamic light scattering measurement are practically and simultaneously carried out.

In such a time-divisional operation, the incident lights may be non-coaxially introduced to the sample cell 10, not coaxially as shown in Fig. 5.

It should be noted that these embodiments are illustrative, and it is apparent that corrections, modifications, additions or the like are possible within the sprit of the present invention, and are included within the claims of the present invention. For example, although particles in a liquid sample were measured in the previously-described embodiment, particles in a gas sample can be measured by the device according to the present invention.

**Claims**

1. A light scattering detector for detecting a microscopic particle in a liquid or gaseous sample, the detector comprising:

   a) a transparent sample cell for holding a sample;
   b) a first light source for emitting a static light scattering measurement light having a first wavelength or a first range of wavelengths;
   c) a second light source for emitting a dynamic light scattering measurement light having a second wavelength or a second range of wavelengths which are different from the first wavelength or the first range of wavelengths;
   d) a first detecting unit comprising plural detectors arranged so as to encircle the sample cell, the detector being capable of selectively detecting the first wavelength or the first range of wavelengths in order to detect lights scattered at different scattering angles around the sample cell in response to an irradiation of the static light scattering measurement light;
   e) a second detecting unit comprising one or plural detectors which are arranged so as to encircle the sample cell, the detector being capable of selectively detecting the second wavelength or the second range of wavelengths in order to detect lights scattered at different scattering angles around the sample cell in response to an irradiation of the dynamic light scattering measurement light; and
   f) a mathematical processor for receiving a detection signal from the first detecting unit and a detection signal from the second detecting unit in parallel when both the static light scattering measurement light by the first light source and the dynamic light scattering measurement light by the second light source are irradiated onto the sample cell at a same time, and then performing both a mathematical operation by a static light scattering method based on the former detection signal and a mathematical operation by a dynamic light scattering method based on the latter detection signal.

2. A light scattering detector for detecting a microscopic particle in a liquid or gaseous sample, the detector comprising:

   a) a transparent sample cell for holding a sample;
   b) a first light source for emitting a static light scattering measurement light;
   c) a second light source for emitting a dynamic light scattering measurement light;
   d) an incident light switcher for time-divisionally irradiating the sample cell with the static light scattering measurement light by the first light source and the dynamic light scattering measurement light by the second light source;
   e) a detecting unit comprising plural detectors which are arranged so as to encircle the sample cell and detect lights scattered at different scattering angles around the sample cell in response to an irradiation of the static light scattering measurement light or the dynamic light scattering measurement light; and
   f) a mathematical processor for separating a detection signal from the detecting unit into a static light scattering detection signal and a dynamic light scattering detection signal in synchronization with a time-divisionally switching of incident lights by the incident light switcher, and then performing both a mathematical operation by static light scattering method based on the former detection signal and a mathematical operation by dynamic light scattering method based on the latter detection signal.

3. The light scattering detector of either one of claims 1 and 2, wherein both of the incident lights by the first light source and the second light source are coherent.

4. The light scattering detector of either one of claims 1 and 2, wherein the incident light by the first light source is incoherent and the incident light by the second light source is coherent.

5. The light scattering detector of any one of claims 1 through 4, wherein a light flux of the incident light by the first light source is larger than a beam size of the incident light by the second light source.

6. The light scattering detector of claim 1, further comprising a light combiner for introducing the incident light by the first light source and the incident light by the second light source to the sample cell along a same light path.

7. The light scattering detector of claim 2, wherein the incident light switcher selectively introduces either the incident light by the first light source or the incident light by the second light source to the sample cell along a same light path.

8. The light scattering detector of any one of claims 1 through 7, further comprising a transmitted light detector for detecting a light which has passed through the sample cell in response to the incident light by the first light source.

Fig. 1

# Fig. 2

LIQUID SAMPLE

Fig. 3

EP 1 884 762 A2

14

Fig. 4

DATA PROCESSOR 15

STATIC LIGHT SCATTERING PROCESSOR 16

DYNAMIC LIGHT SCATTERING PROCESSOR 17

13
13a
12
12a
11
SCATTERED LIGHT
TRANSMITTED LIGHT
10
S
INCIDENT LIGHT
INCIDENT LIGHT
E1
E2
8
61
62
9
L1
L2
3
4
1
2

## Fig. 5

# Fig. 6

20
20b
20c
ROTATE
α
α
20a

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4541719 A

- US 5129723 A

**Non-patent literature cited in the description**

- Jikken Kagaku Koza 26 - Kobunshi Kagaku. Maruzen, 2005, 315-323
- Shin Kobunshi Jikken Gaku 6. Kyoritsu Shuppan, 1997, 299

- dynamic Light Scattering Spectrophotometer DLS-8000 series. Super-dynamic Light Scattering Spectrophotometer DLS-8000 series. OTSUKA ELECTRONICS CO., LTD, 19 June 2007